# EUROPEAN PATENT APPLICATION

(11) **EP 4 567 233 A2**
(43) Date of publication of application: **11.06.2025**
(21) Application number: 24211924.6
(22) Date of filing: 08.11.2024
(51) Int. Cl.: E05D 1/06, E05D 3/04, E05D 7/00

(54) **HEATED CABINET SYSTEM FOR COMBINING MULTIPLE CABINETS**

(30) Priority: 04.12.2023 US 202363605725 P
(71) Applicant: Carter-Hoffmann, LLC, Mundelein, IL 60060 (US)
(72) Inventor: GUTIERREZ, Juan, Mundelein, IL 60060 (US)
(74) Representative: Mathys & Squire

(57) **Abstract**

A system for modular heated cabinets is provided. The system includes a connection system to allow cabinets to be connected to either other in any side by side arrangement with each other such that the cabinets can be arranged in the desired arrangement at the time installation. A hinge system to allow for hanging doors from a cabinet in different orders is also provided.

## Description

### CROSS-REFERNCE TO RELATED APPLICATIONS

This application claims priority from United States Provisional Application No. 63/605,725, filed on December 4, 2023, the entirety of which is hereby incorporated by reference herein.

### BACKGROUND OF THE INVENTION

This application relates to a system with a plurality of heated storage cabinets, such as cabinets that are provided for use to support a preparation line in a restaurant.

### SUMMARY OF THE INVENTION

A first representative embodiment of the disclosure is provided. The embodiment includes a hinge system for supporting a plurality of doors. The hinge system includes a bracket that is configured to be fixed to a housing, the bracket aligned to receive complimentary features from one or more doors that hang from the bracket. The bracket comprises a panel that is configured to be rigidly mounted to the housing, a plurality of offset supports that extend from the panel in a cantilevered manner; and a plurality of support walls that extend from respective offset supports and extend substantially perpendicular to a plane through the respective offset supports. The bracket extends from a first end portion to an opposite second end portion, a first offset support of the plurality of offset supports that is aligned at the first end portion further comprises a first tab that extends from the support wall that extends from the first offset support, wherein the first tab extends substantially in parallel to and above the respective first offset support to establish a space therebetween, and a second offset support of the plurality of offset supports that is aligned at the second end portion further comprises a tab that extends from the support wall that extends from the second offset support, wherein the tab extends substantially in parallel to and above the respective second offset support to establish a second space therebetween.

Another representative embodiment of the disclosure is provided. The embodiment includes a method of installing doors upon a housing. The method includes the following steps:
providing a housing with a surface that rigidly supports a bracket thereon, the bracket aligned to receive complementary features of one or more doors that hang from the bracket, the bracket comprising:
a panel that is configured to be rigidly mounted to the housing, a plurality of offset supports that extend from the panel in a cantilevered manner; and a plurality of support walls that extend from respective offset supports and extend substantially perpendicular to a plane through the respective offset supports,
the bracket extends from an first end to an opposite second end, a first offset support of the plurality of offset supports that is aligned at the first end further comprises a first tab that extends from the support wall that extends from the first offset support, wherein the first tab extends substantially in parallel to the respective first offset support, and a second offset support of the plurality of offset supports that is aligned at the second end further comprises a tab that extends from the support wall that extends from the second offset support, wherein the tab extends substantially in parallel to the respective second offset support,
a third offset support of the plurality of offset supports that is adjacent to and inboard of the first offset support comprises a tab that extends from the support wall that extends from the third offset support, wherein the tab extends substantially in parallel to the third offset support, and
a fourth offset support of the plurality of offset supports that is adjacent to and inboard of the second offset support comprises a tab that extends from the support wall that extends from the fourth offset support, wherein the tab extends substantially in parallel to the fourth offset support;
providing a plurality of doors, wherein each door of the plurality of doors comprises:
at least two spaced supports which are the complementary features, wherein when the respective door of the plurality of doors is aligned with the bracket, the two spaced supports rest upon two offset supports of the plurality of offset supports,
the first door is supported by the bracket such one of the at least two spaced supports is disposed under the first tab, and a second door of the plurality of doors that is supported by the bracket and positioned proximate to the second end of the bracket, the second door is supported by the bracket such that one of the at least two spaced supports is disposed under the second tab; and
initially placing the first spaced supports of the two spaced supports that will rest upon the first offset support with the first tab at a position upon or aligned with the first offset support that is not directly below the tab, and then sliding the first door horizontally such that the two spaced supports slide upon the respective offset supports until the first spaced support is positioned vertically below the tab.

Another representative embodiment of the disclosure is provided. The embodiment includes a system of fixing two heated cabinets together. The system includes:
a first cabinet that includes opposite left and right side surfaces, and a rear wall that extends between the opposite left and right side surfaces, the first cabinet is heated by a heating system; and
a second cabinet that includes opposite left and right side surfaces, and a rear wall that extends between the opposite left and right side surfaces, the second cabinet is heated by a heating system;
the rear wall of each of the first and second cabinets comprises first and second sets of vertically aligned and spaced apertures, with each respective first set of apertures centered along a first vertical line that is at a first distance from a left end of the rear wall that is proximate to the left side surface, and each respective second set of apertures is centered along a second vertical line that is at the first distance from a right end of the rear wall that is proximate to the right side surface, wherein each aperture within the first and second sets of apertures corresponds to an aperture of the other of the first and second sets of apertures, wherein each corresponding aperture from the first and second sets has a top edge that is at the same vertical height within the rear wall and has a bottom edge that is at the same lower vertical height within the rear wall;
a connection bracket, the connection bracket comprises an elongate support, and comprises a first plurality of legs and a second plurality of legs that each extend substantially perpendicularly from the elongate support, each leg establishes an outer end that extends the furthest away from the elongate support, each of the first plurality of legs are vertically aligned with each other and each of the second plurality of legs are vertically aligned with each other, wherein each leg of the first plurality of legs is in horizontal alignment with a corresponding leg of the second plurality of legs;
each leg comprises a tooth that extends downwardly therefrom, wherein the tooth establishes a space between the tooth and the elongate support wherein the space has a thickness is greater than a thickness of the rear wall that defines the apertures.

Other representative embodiments are provided that include the various aspects discussed in the Numbered Paragraphs at the end of this specification.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF DRAWINGS

FIG. 1 is a front perspective view of an assembly of two cabinets that are fixed together where a first cabinet (310) is positioned to a right of a second cabinet (340) (with the right and left directions from the perspective of a person standing in front of the cabinets) with a plurality of doors hanging from the first cabinet by a hinge system.
FIG. 2 is a rear view of the assembly of FIG. 1.
FIG. 3 is a rear perspective view of the assembly of FIG. 1 with the connection bracket removed.
FIG. 4 is a rear perspective view of the assembly with the second cabinet (340) placed to the right of the first cabinet (310).
FIG. 5 is a detail view rear perspective view of the cabinet as arranged as in FIG. 1.
FIG. 5a is an internal detail view of the cabinets as arranged in FIG. 1.
FIG. 6 is a side cross-sectional view of the connection bracket as it is being installed upon the first and second cabinets.
FIG. 7 is a perspective view of the connection bracket.
FIG. 8 is a side view of the connection bracket of FIG. 7.
FIG. 8a is a detail view of detail BB of FIG. 8.
FIG. 9 is a front perspective view of the hinge system usable with the first cabinet 10 showing a of doors hanging from a bracket.
FIG. 10 is a rear perspective view of the hinge system and doors of FIG. 9.
FIG. 11a is a front view of the hinge system and doors of FIG. 9.
FIG. 11b is a rear view of the hinge system and doors of FIG. 9.
FIG.12 is a perspective rear detail view of the a door hanging from the bracket.
FIG. 13a is a front view of the hinge system and doors with the doors hanging in a different order upon the bracket.
FIG. 13b is a rear view of the hinge system and doors of FIG. 13a.
FIG. 14 is a rear perspective detail view showing the third door approaching the bracket for hanging the door from the bracket.

### DETAILED DESCRIPTION OF THE INVENTION

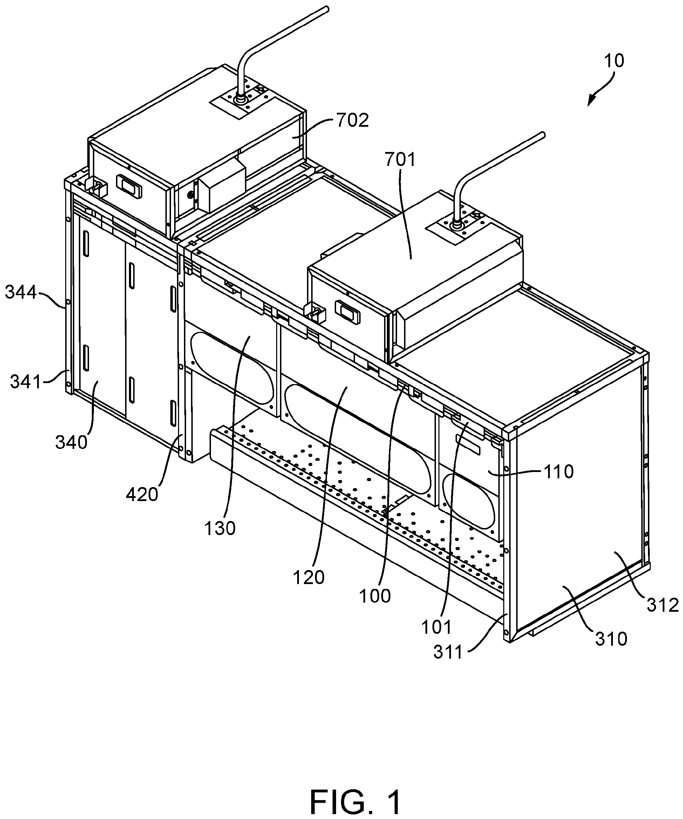

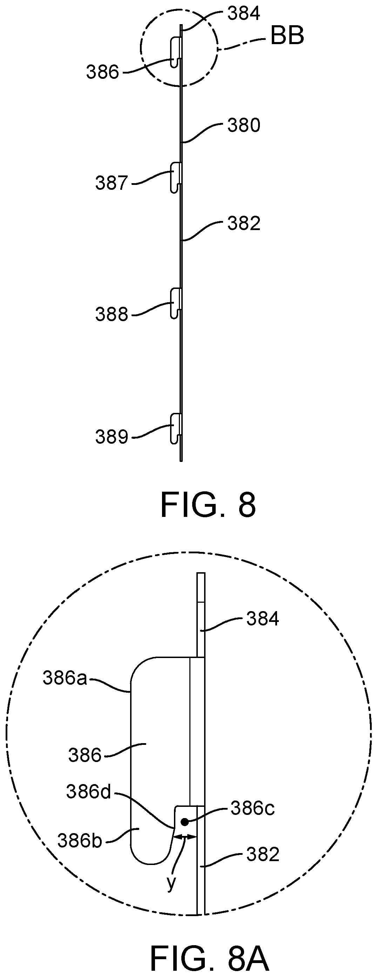

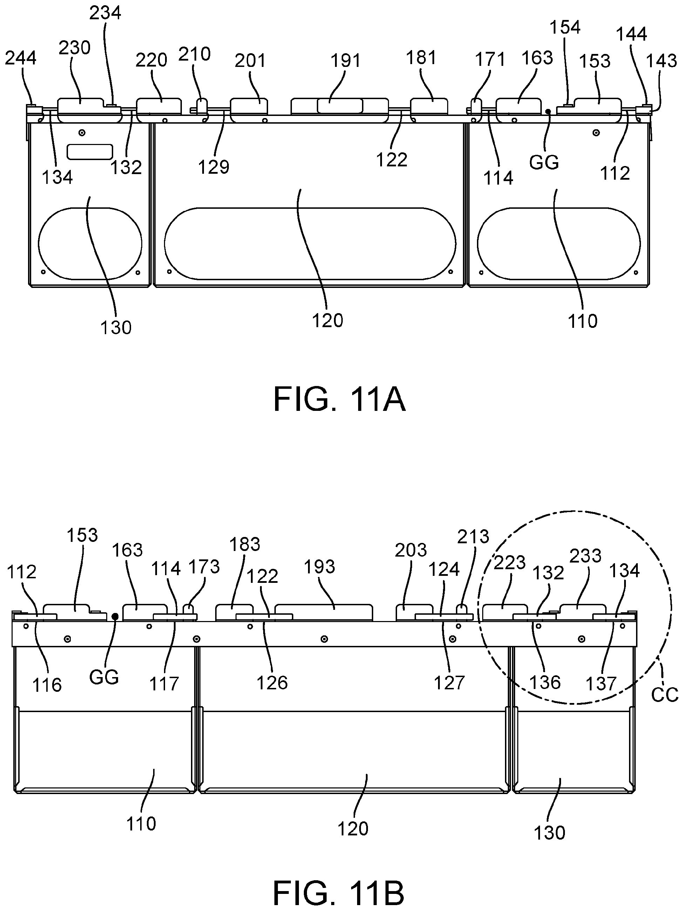

Turning now to FIGs. 1-14 provides a system 10 of multiple heated cabinets. The cabinets 310, 340 may be provided and installed within a kitchen of a restaurant and provided to store in a heated manner different foods that are staged for use in a product line for a restaurant. The cabinets 310, 340 may be mounted within the kitchen in an elevated fashion so that the cabinets 310, 340 are positioned above a prep counter, which is provided to support a food that is being prepared from multiple different ingredients and components in a series fashion as the food is passed from one end of the prep line to a second end of the prep line. The cabinets 310, 340 are different are configured to support and store various food items for easy access during the food prep process.

The cabinets 310, 340 are provided to be heated to one or more temperatures as desired for heating and storage of the food items, such that a first heating units 701 associated with the first cabinet 310 may provide heat to heat the various compartment of the cabinet 310, and the second heating unit 702 associated with the second cabinet 340 may provide heat to the various compartments of the second cabinet 340. The heat input into the two cabinets may be different - such as a first cabinet 310 heated to maintain one or more spaces within the first cabinet at about 160 degrees F (plus or minus about 10 degrees) and the second cabinet 340 heated to maintain one or more spaces within the second cabinet 340 at about 210 degrees F (plus or minus about 10 degrees). In some embodiments, the units 701, 702 may be the same unit and may be adjustable in the field to maintain the desired temperature associated with the cabinet the unit is associated with. In other embodiments, the units may be capable of keeping different spaces within the same cabinet at different temperatures, including some of the spaces at room temperature. The units may heat with electrical resistive heating or with different types of heaters known in the art. The units may operate with feedback control as is known in the art, as operated by a controller 1000 (schematic).

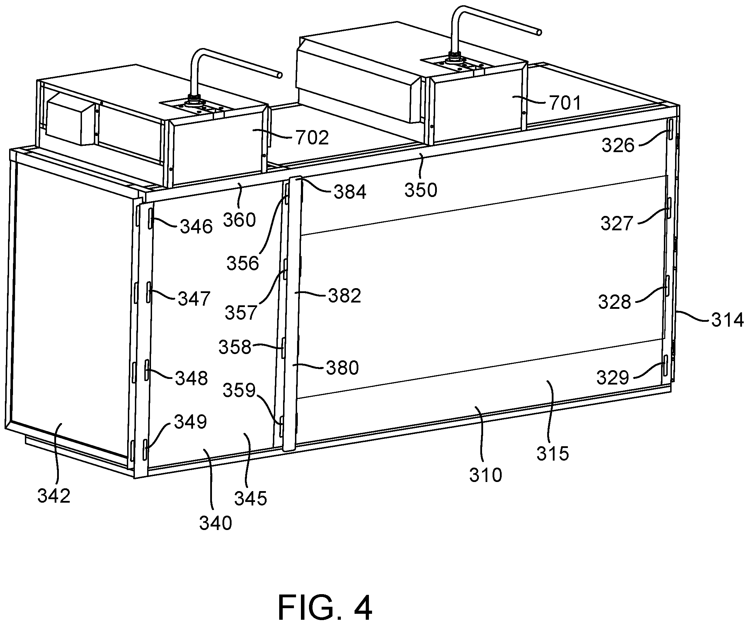

The system 10 is configured to be modular in nature such that the first and second cabinets 310, 340 can be assembled together in the field in either order, i.e. with the first cabinet 310 to the right of the second cabinet 340 (from the perspective of a kitchen professional - FIGs. 1-3) that stands in front of the prep counter and in position to access both cabinets 310, 340 as needed for the food prep line, and the cabinets 310, 340 may alternatively be assembled together in the field with the second cabinet 340 to the right of the first cabinet 310 from the same perspective (FIG. 4). The structural improvements of the system and method disclosed herein in beneficial as it allows for universal first and second cabinets 310, 340 to be manufactured and shipped to the field instead of needing to make by right and left versions of the first cabinet 310 and right and left version of the second cabinet 340, with the additional complications and cost that are associated with manufacturing and keeping specific right and left versions of both cabinets 310, 340.

The system 10 also includes an improved hinge system that is flexible to allow the plurality of doors associated with a cabinet (e.g. doors 110, 120, 120 associated with the first cabinet 310) to be hung from the cabinet in any desired order. Each of these improvements associated with the system and the method disclosed herein allow flexibility for installing the first and second cabinets 310, 340 in either order (FIG. 1, FIG. 4) with the decision to be made of the order at the job site based upon the assembly of the remainder components associated with the kitchen and the other factors, i.e. employee prep room to stand surrounding the cabinets, the overall flow path of the food prep process within the kitchen, and with respect to a customer within restaurant delivery position, and with respect to a drive through food delivery position (when provided) within the kitchen.

With reference to FIGs. 1-8b the system for aligning and assembling the first and second cabinets 310, 340 (in either order) is provided. The first cabinet 310 includes right and left side walls 312, 314, and a rear wall 315 that extends between the right and left side walls 312, 314. The second cabinet 340 includes right and left side walls 342, 344, and a rear wall 345 that extends between the right and left side walls 342, 344. The cabinets also include various other structural features as known in the art to establish cabinets that are structurally built to be hung or positioned and to support that weight that is associated with the cabinets. The cabinets further also include various features as known in the art to establish the desired temperatures within one or more spaces within each cabinet, desired lights, desired placards for instructions, desired monitors for displays associated with the cabinet (to display recipes, inventory within the cabinet, temperatures, food holding status (e.g. holding time, time left until food needs to be replaced ) and the like. Each cabinet includes a rear wall 315, 345, which may be a single wall that extends across the entire rear surface of the cabinet (or inside any other components that form the right and left rear edges of the cabinet), or the rear wall 315, 345 may be formed by multiple walls that are collectively form the rear of the cabinet - the rear wall is defined to include all versions of the cabinets and to collectively include the rear surface of the respective cabinet.

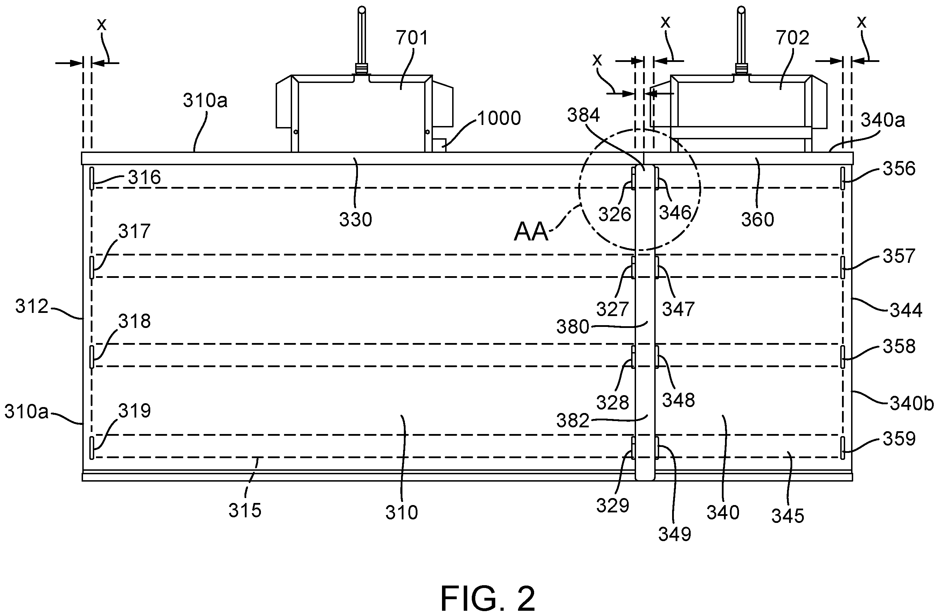

Each of the first and second cabinets 310, 340 includes upon its respective rear wall 315, 345 respective first and second sets of vertically aligned spaced apertures (first cabinet - first set: 316, 317, 318, 319, second set: 326, 327, 328, 329). The sets of apertures may include any number of apertures, such as 2, 3, 4, 5, or the like. The apertures within each set are disposed such that they all extend with a center of the respective aperture extending along the same vertical line. The apertures within each set are disposed such that the vertical line for the set of apertures is provided at a distance X from a vertical edge of the cabinet proximate to the set of apertures, as depicted in FIG. 2. For example, for the first set of apertures of the first cabinet (FIG. 2, 316, 317, 318, 319) the apertures are all arranged vertically about a line that is a distance X from the rear right edge 310a of the cabinet. The convention for left and right in this specification is of the perspective of a person that stands in front of the cabinets at the prep line- and therefore the right rear edge 310a appears as the left edge as the rear view of the cabinets 310, 340 is upon FIG. 2.

As depicted in FIG. 2, each cabinet 310, 340 has the same number of vertically aligned apertures proximate to the right and left edges of the respective cabinet (4 depicted in the figures, but could be another number e.g. 2, 3, 5, etc.). The apertures are preferably all formed with the same height and width. The apertures are preferably all horizontally aligned with the respective same aperture on the opposite side of the cabinet, and the respective same apertures on the other of the first or second cabinet 310, 340. FIG. 2 depicts several horizontal broken lines that depict that each aperture (e.g. horizontally aligned apertures of the first and second cabinets 310, 340: 317, 327, 347, 357) have top edges at the same height and bottom edges of the same height.

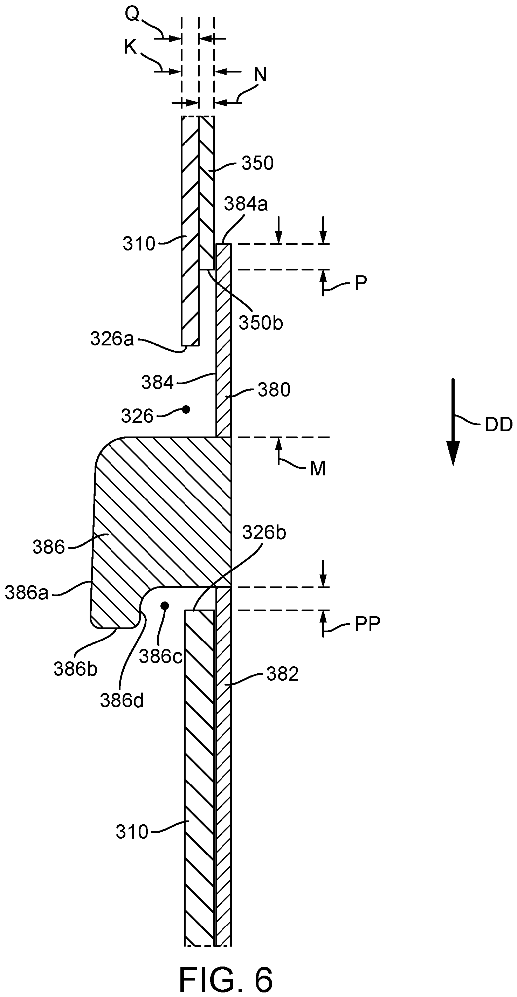

In some embodiments each cabinet 310, 340 has a panel 330, 360 that extends horizontally across a top portion of the rear side of the cabinet, which may establish a rear top edge 31 0a, 340a of the respective cabinet or may be positioned below the rear top edge. The panel 330, 360 is attached to the rear wall 315, 345 and extends beyond the rear wall as depicted in FIG. 6. The panel has a thickness N. The combined rear wall 310 and the panel 330 have a thickness K. The bottom edge (330a, 360a) of the panel 330, 360 is spaced from a top edge (e.g. 326a) of the upper-most apertures (316, 326, 346, 356) a distance M.

A connection bracket 380 is provided to connect to both the first and second cabinets 310, 340 to fix the two cabinets together. In embodiments depicted in FIG. 1 where the first cabinet 310 is to the right of the second cabinet 340, the connection bracket 380 (and specifically legs (e.g. 386) of the connection bracket 380) extends within the vertically aligned second apertures 326, 327, 328, 329 of the first cabinet and the corresponding vertically aligned first apertures 346, 347, 348, 349 of the second cabinet 340, as best shown in FIGs. 2, 5, 5a, and 6. In embodiments depicted in FIG. 4 where the second cabinet 340 is to the right of the first cabinet 310, the connection bracket 380 extends within the vertically aligned second apertures 356, 357, 358, 359 of the second cabinet 340 and the first apertures 316, 317, 318, 319 of the first cabinet 310. In some embodiments that cabinets may include structural flanges e.g. 338 (first cabinet, by or upon the left side wall 314) and 368 (second cabinet, by or upon the right side wall 342) with apertures (339, 369) to accept fasteners (e.g. bolts, not shown) to further mechanically fix the two cabinets together.

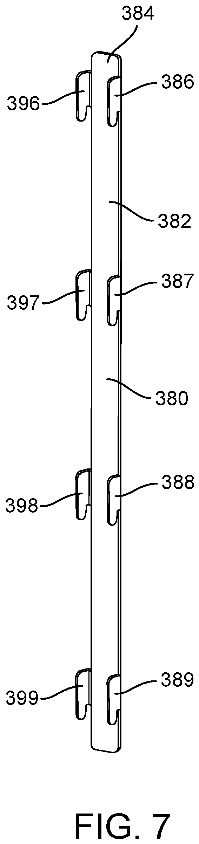

The connection bracket 380 is depicted in FIGs. 7-8a. The connection bracket 380 includes an elongate support 382 from which aligned first and second pluralities of legs extend. The legs may extend substantially perpendicular to the elongate support. The elongate support 382 may be a flat planar element with a thickness N that is the same as the thickness of the panel 330, 360, or a thickness that is less than a thickness of the panel. The first and second pluralities of legs (first plurality e.g. 386, 387, 388, 389; second plurality e.g. 396, 397, 398, 399) that are aligned together vertically and in pairs such that the upper most legs from the first and second pluralities are extend from the elongate support 382 in the same direction, and are aligned in the same vertical position, with each successive pair of legs also extending in the same direction from the elongate support 382 and at the same vertical position that is lower than the vertical position that legs above the respective pair extend.

Each leg (e.g. 386) may have the same size and geometry. In other embodiments, the legs may have differing geometries for legs in different pairs of legs at different vertical positions upon the elongate support 382, and in these embodiments, the apertures that correspond to the legs may also have correspondingly different geometries.

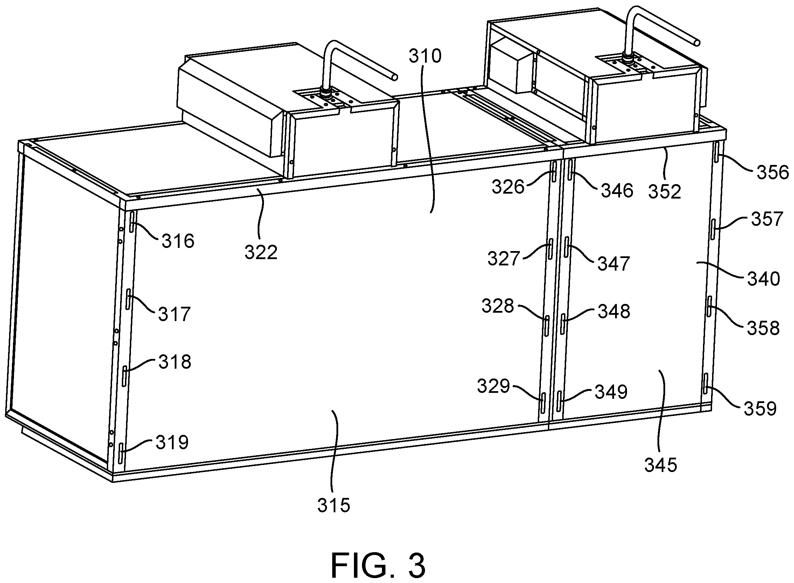

In embodiments where each leg has the same size and geometry, each leg may have an outer end (e.g. 386a) that is the edge furthest from the elongate support 382, and a tooth (e.g. 386b) that is a bottom portion of each leg. In some embodiments, an outer end of each tooth extends along a plane with at least a portion of the outer end of the leg 386a from which the tooth 386b extends. The tooth 386b extends downwardly (from the perspective of how the connection bracket 380 is installed) and forms a space (e.g. 386c) between an inner edge of the tooth (e.g. 386d) and the elongate support 382. Within the space 386c, the distance between the inner edge 386d and the elongate support 382 is larger than distance K (FIG. 6) i.e. the combined thickness of the rear wall (e.g. 310) and the respective panel (e.g. 350). The leg is formed such that when the legs each extend within corresponding aligned apertures (e.g. apertures 326, 346 (FIGs. 2, 3)) the upper edge (e.g. 326b) of the respective aperture that receives the leg 386 contacts the body of the leg 386 with the rear wall (e.g. 315 extending within the space 386c.

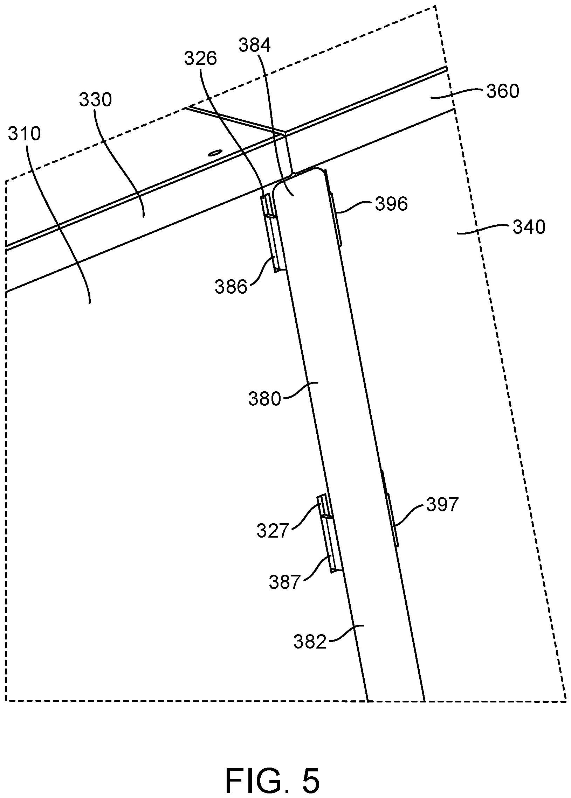

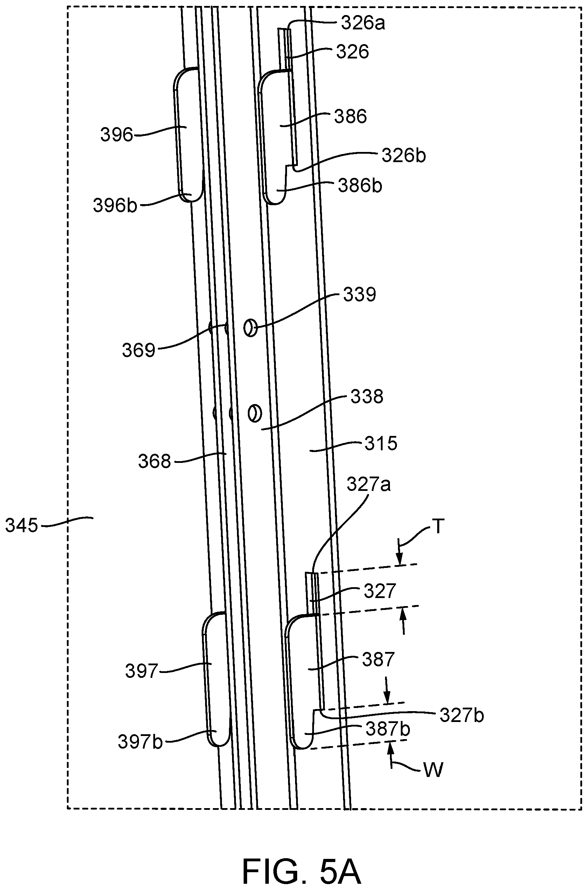

The space 386c is wider than the distance K to allow the leg to extend with aperture and moved downwardly within the aperture 326 to a position where the tooth 386b is aligned horizontally at or below the lower edge (e.g. 326a) of the aperture 326 through which the leg 386 extends while some of the upper portion 384 of the elongate support 382 is aligned with the panel 350 (FIG. 6 - distance P which is smaller than distance PP). From the view of FIG. 6 when the connection bracket 380 is further lowered in the direction DD a distance just longer than distance P with respect to the rear wall 310 the upper portion 384 clears below the panel 350 and the upper portion 384 contacts the rear wall 310, as depicted in FIG. 5. Preferably the top surface 384a of the elongate support 382 is disposed below and in very close proximity to the bottom surface 350b of the panel 350, which tends to "lock" the connection bracket 380 into place with respect to both the first and second cabinets 310, 340, which locks the two cabinets together. It is preferred that the top surface 384a of the elongate support 382 is in contact with the bottom surface 350b of the panel, or with a very small space therebetween such as a space no larger than a thickness of the panel N, a thickness of the rear wall Q, or about these thicknesses. As depicted in FIG. 5a, the apertures (e.g. 327 in the figure) are sized with respect to the leg (e.g. 387 in the figure) such that when the leg is fully inserted into the aperture and when the leg rests upon the bottom edge of the aperture (327b), the aperture is is wide enough such that a distance T between the top of the leg to the top edge of the aperture (327a) is longer than a distance that the tooth (e.g. 387b) extends below the remaining body of the leg (distance W).

With reference to FIG. 5, in some embodiments, when the connection bracket 380 is installed within the pluralities of vertically aligned apertures from each of the first and second cabinets, the connection bracket 380 extends below a portion of the panel 330 of the first cabinet 310 and the panel 360 from the second cabinet 340. In some embodiments, the outer surface (i.e. surface that faces away from the rear wall) may be substantially flush with the outer surfaces of the panels 330, 360. The term substantially flush means extending along the same plane or within planes that are very close either parallel with each other, or offset at slight angles with each other and within spaces that would be based upon acceptable tolerances in the industry.

As best understood with reference to FIGs. 5 and 6, the first and second cabinets 310, 340 are connected together with the following method. Initially, the first and second cabinets 310, 340 are placed next to each other in the relative positions as desired for the efficient and ergonomic food preparation within the kitchen. In some embodiments, the first cabinet 310 and be position on the right of the second cabinet 340, such that the left surface 314 of the first cabinet 310 faces and is aligned with the right surface 342 of the second cabinet 340. In some embodiments the left surface 314 of the first cabinet 310 may be in contact with the right surface 342 of the second cabinet 340, while in other embodiments, there may be a small space therebetween, which is filled with filler materials, insulation, an air gap or the like. The first and second cabinets 310, 340 are constructed such that when aligned together, the collective top surfaces are aligned with each other (and potentially along the same plane, as with the collective bottom surface).

After the first and second cabinets are aligned with respect to each other, a connection bracket 380 is positioned such that the legs that extend from connection bracket 380 extend within through the respective vertically aligned apertures within the rear walls 315, 345 of the cabinets. Specifically, the top row of legs 386, 396 extend into the top row of apertures (326, 346 when aligned with first cabinet 310 on the right, 356, when aligned with the second cabinet 340 on the right), the row below of legs 387, 397 extend into the next row below apertures 327, 346 - or 357, 317 if in the opposite arrangement) and the like until all of the legs extend into aligned apertures.

Initially, the upper portion 384 of the elongate support 382 may be in horizontal registry and contact with one or both of the panels 330, 360 of the cabinets, as depicted in FIG. 6. In this position, the tooth (e.g. 386b) of each leg is above the lower edge of each aperture (e.g. 326b). As the connection bracket 380 is slid downwardly with respect to the rear panels (315, 345) the upper portion 384 eventually clears the panels and can be placed into contact with the with the rear wall (FIG. 5). In this position, the tooth of each leg (e.g. 386b) extends below the lower edge (e.g. 326b) of each aperture, with maintains the legs of the connection bracket 380 within each aperture. In some embodiments, the upper edge 384a of the elongate support 382 is in contact with or very close proximity (as defined herein) to the bottom of the panels 330, 360, which prevents the connection bracket 380 from sliding upwardly with respect to the rear panels 315, 345 to allow the tooth to raise above the lower edge of each aperture as would be needed to remove the connection bracket from the rear walls 315, 345. If it is desired to remove the connection bracket 380, a pair of pliers or other tools could engage the upper portion 384 of the elongate support 382 away from the rear panel (or pry it away for example with a flat head screw driver) to allow the upper portion 384 to be pulled outwardly to be clear of the lower surface of the panels 330, 360 (FIG. 6).

After the connection bracket 380 is installed upon the rear walls 315, 345, other fasteners could be used to further mechanically the first and second cabinets together, as discussed above. Additionally, a front cover 420 may be installed upon front faces 311, 341 of the respective first and second cabinets 310, 340. The front cover 420 covers an edge upon between the left wall 314 and the right wall 344 of the respective cabinets (when in the arrangement depicted in FIG. 1, and the opposite attached walls when in the other arrangement of FIG. 3) to hide the vertical seam (or space) between the two adjacent or in contact walls. The front cover may be fixed to the first and second cabinets 310, 340 with fasteners. Alternatively, the front faces of the first and cabinets 310, 340 may have apertures (like the apertures described upon the rear walls above, and the front cover may be structured with legs that extend into those apertures like the connection of the connection bracket 380 to the rear walls 315, 345 discussed above.

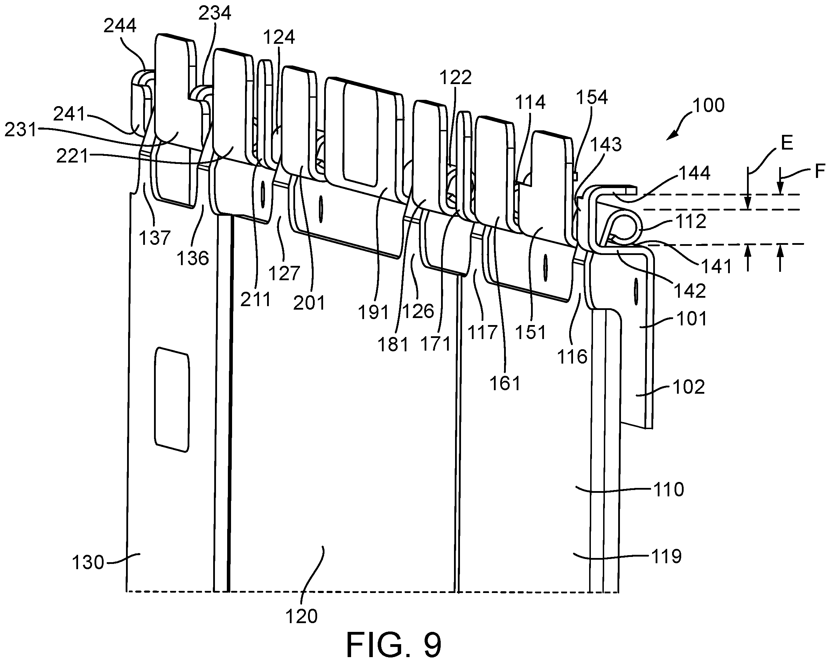

Turning now to FIGs. 9 to 13a a hinge system 100 to support a plurality of doors (e.g. 110, 120, 130) upon the front face of a cabinet is provided. In the figures, the first cabinet 310 includes the system, although the hinge system may be different sized (and include a different arrangement and number of tabs and offset supports (as discussed below) may be provided to allow the system to be used with cabinets of different sizes and orientations.

The hinge system 100 includes a bracket 100 that is fixed to a cabinet 310, and a plurality of doors (110, 120, 130) that are rotatably fixed upon the bracket to hang the doors upon the cabinet 310. The bracket may be fixed to the front wall 311 of the cabinet, or may be fixed to other portions of the cabinet and be arranged such that the doors hang therefrom to be positioned as desired with respect to the front wall 311 (such as with a plane of the front wall, within a plane outside of the front wall 311 or within a plane inboard of the front wall 311. Alternatively, the bracket 101 may be fixed to a top wall of the cabinet or within the cabinet to a ceiling within the cabinet.

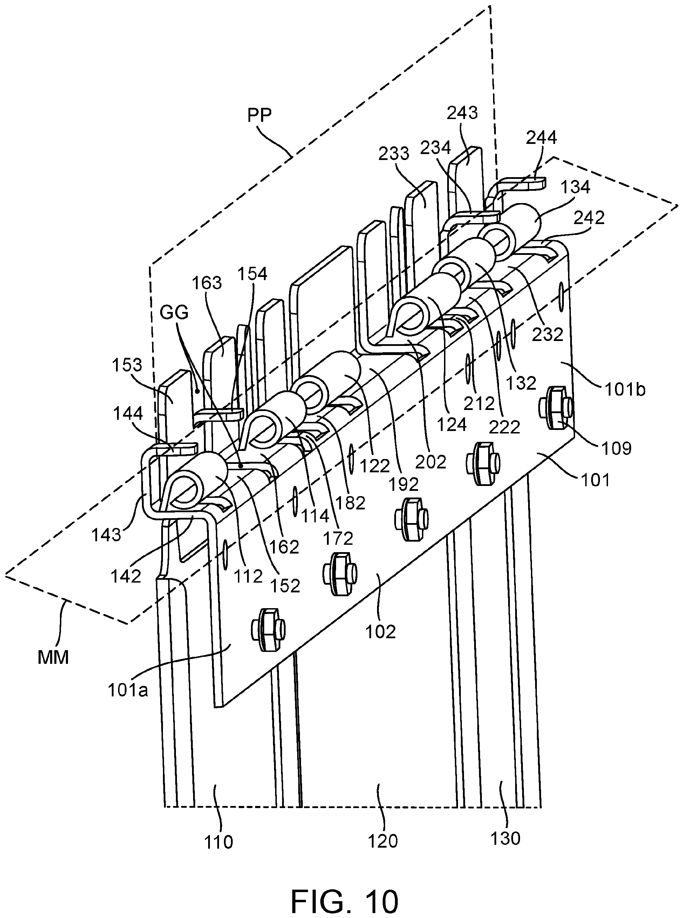

The bracket 101 includes a panel 102 that is fixed to or with respect to the housing of the cabinet. A plurality of spaced offset supports (discussed below) extend from the panel 102 preferably in the same direction and along the same plane (MM). In embodiments where the panel 102 is mounted vertically to the housing (FIGs. 9, 10), the offset supports (e.g. 142, 152, 162, etc. - see FIGs. 9 and 10) extend substantially horizontally from the panel 102, which is substantially perpendicular to the panel 102. The offset supports (e.g. 142, 152, etc.) establish horizontal surfaces that spaced supports (e.g. 112, 114 of the first door 110) rest upon and hang over. The spaced supports are further discussed below.

A support wall (e.g. 143, 153, 163 etc.) extends from an end of each offset support (142, 152, 162). Each support wall extends an angle from the offset support and in some embodiments extends substantially perpendicularly from the respective offset support. The support walls may each extend substantially vertically, and all preferably extend through the same plane (PP). The support walls are provided to rotatably fix the spaced supports of the doors in place upon the offset supports that the spaced supports rest upon (in combination with the housing of the cabinet on the opposite side of the offset support from the respective support wall.

Each of the offset supports (e.g. 142, 152, 162 etc.) may extend from a top portion 102a of the panel 102, with each respective support wall (e.g. 143, 153, 163, etc.) extending from an end of the offset support opposite from the end that extends from the panel 102. Accordingly, in this embodiment these three components (e.g. the panel 102, the plurality of offset supports (e.g. 142, 152, 162, etc.), and the plurality of support walls (143, 153, 163, etc.) are all formed from a single piece, that is bent into the desired orientation for each of these components. In some embodiments, the various pluralities of offset supports and support walls that extend therefrom may be formed by machining slots (open space between adjacent offset supports and support walls) to establish open spaces (e.g. space GG between the offset supports 152, 162 and the support walls 153, 163) to separate the various offset supports and support walls from each other. The open spaces (e.g. GG) allow the arms of the doors 110 (e.g. arms 116, 117 of the first door 110) to extend therethrough so that the spaced supports (e.g. 112, 114 of the first door 110) can extend upon the appropriate offset supports as discussed herein.

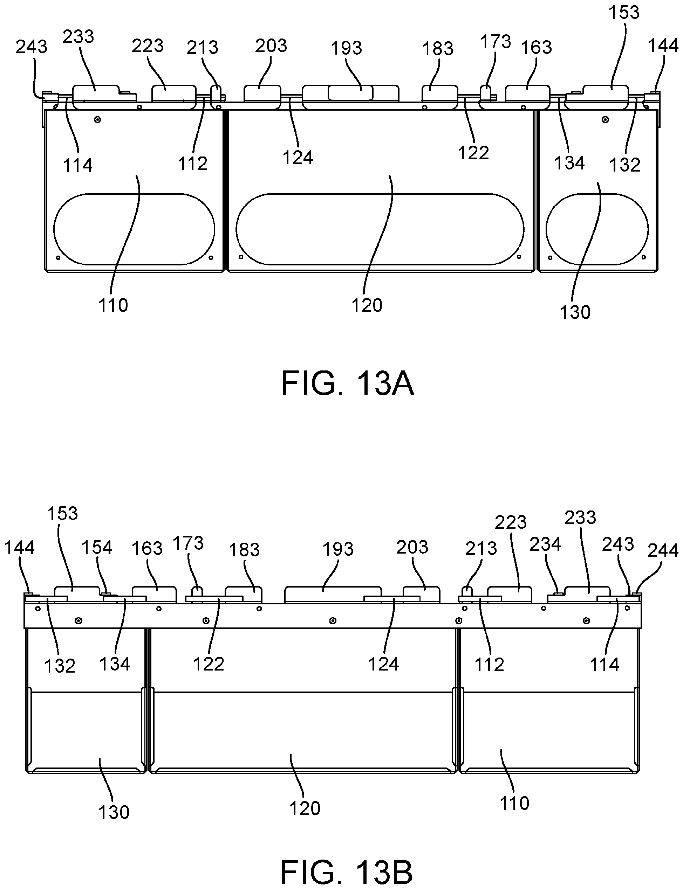

In the arrangement of doors depicted in FIGs. 9-10 (i.e. door 110 on the right side of the cabinet), nothing extends through the open space GG identified in FIGs. 9 and 10, and a first arm 116 for the first door extending through (in one example) the open spaces defined between the offset supports 142 and 152 with the other arm 117 extending through the open space between offset supports 162 and 172. In the door arrangement depicted in FIGs. 13 and 13a (door 110 on the left side of the cabinet, door 130 on the right side of the cabinet 310) the left arm 137 extends through space GG as identified above, and the right arm extends through the space between offset supports 142 and 152.

Some of the support walls include tabs that are formed substantially in parallel with the respective offset supports from support walls extend. The tabs are disposed in a spaced manner vertically above the respective offset support and are at a distance F above the offset support (FIG. 9) that is greater than a diameter (or largest cross-sectional distance) of the spaced supports (e.g. 112, 114 of the first door 110) that is positioned between the tab and the offset support when the door is positioned in the desired position upon the cabinet 310.

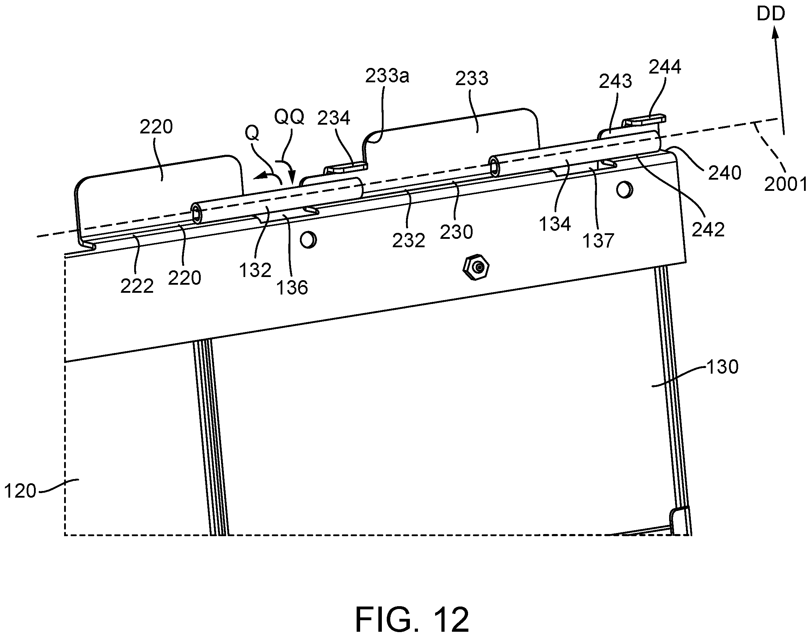

The tabs are best shown in FIGs. 9 and FIG. 12 (which depicts the supports 132, 134 of the third door 130 resting upon the offset supports 222, 232, 242 - specifically the right support 132 resting upon offset supports 222 and 232, and the left support 134 resting upon the offset supports 232 and 242). Each of tabs 234 and 244 extend in parallel to the offset supports that they ultimately extend from and are in a position to be vertically above a portion of the supports 132, 134, to prevent the supports in the position as shown (the position when fully installed - as discussed above) from being raised vertically with respect to the cabinet, such that the only freedom of motion of the third door 130 when fully installed is rotational (arrows Q and QQ - FIG. 12) about the housing and the axis 2001 through the door supports 132, 143.

The tabs may extend directly from the support wall (e.g. tab 244 extends directly from support wall 243) and be bent into the orientation that is substantially parallel with the offset support (e.g. 242). The tabs may be formed by forming a slot (not shown) between the portion of the support wall that is to form the tab and the portion of the support wall that will remain in the vertical orientation to allow the tab to be bent into position. As depicted with respect to support wall 233 from which tab 234 extends, the remaining support wall 233 may be machined or otherwise formed to have a curved surface 233a to prevent exposed sharp corners of the support walls.

A specific embodiment of the bracket 101 that is depicted in the figures is described herein including specific positions that include tabs. One of ordinary skill in the art will readily understand after a thorough review of this specification and figures that the bracket 101 can be constructed in alternative manners (i.e. to include different numbers of offset supports, support walls, and tabs, and such that the tabs extend from different support walls) - based upon the number, type and size of doors that are desired to hang from the housing of the cabinet, and modifications to the bracket 101 to incorporate different numbers, and sizes and types of doors with knowledge of these is possible with merely routine optimization based upon the thorough understanding of this specification.

The bracket 101 of the figures includes offset supports 142, 152, 162, 172, 182, 192, 202, 212, 222, 242, and 242 that each substantially extend through plane MM, which is a horizontal plane in this embodiment. The term "substantially extend" is defined here to mean that all offset supports have a design intent to extend through the same plane MM but common manufacturing tolerances that are acceptable in the industry may cause the actual offset panels to extend along slightly different planes due to the manufacturing tolerances. A support wall extends from each offset support. The support walls are numbered such that its element number shares the same first two digits as the offset support from which it extends (i.e. support wall 153 extends from offset support 152). In this embodiment, support walls 143, 153, 163, 173, 183, 193, 203, 213, 223, 233, 243 are provided. All of the support walls may substantially extend through plane PP in this embodiment, or some or more support walls may extends at different planes.

The bracket 101 may extend from a first end 101a to an opposite second end 101b. The first offset support 142 may be positioned at the end wall of the first end 101a, or proximate to but spaced away from the end wall at the first end 101a. Similarly the final offset support 242 (at the opposite side of the bracket from the first offset support 142) may be positioned at the end wall of the second end 101b, or proximate to but spaced away from the end wall at the second end 101b.

In this embodiment tabs 144, 154, 234, and 244 are provided, with the tab extend from the same support wall that includes the same two first digits as the element number of the tab (i.e. tab 144 extends from support wall 143). Some or all of the tabs substantially extend through a plane that is parallel the plane MM, and is offset from the plane MM a distance F (FIG. 9) that is larger than a diameter or a largest cross-sectional distance of the spaced supports (e.g. 112, 114 for the first door 110) for the doors (discussed herein) that when the doors are properly position extend between some of the tabs and offset supports.

Each of the adjacent offset supports and each of the adjacent support walls include a space (e.g. GG between offset supports 152, 162). The spaces are provided to allow arms (e.g. 116, 117) of doors to extend therethrough to allow the arms for the doors to extend therethrough when the spaced supports (e.g. 112, 114) rest upon the offset supports.

The hinge system 100 is capable of supporting a plurality of doors in different arrangements therein. In the embodiment depicted in the figures, a first door 110, a second door 120, and a third door 130 may be supported therein. The doors can be supported in any order, with figures 9-10 depicting the doors in the order (right to left) first door 110, second door 120, third door. FIGs. 13a and 13b depict the doors in the order third door 130, second door 120, first door 110. In another embodiments the doors may be arranged still differently as can be understood by one of skill in the art after a thorough review and comprehension of this specification.

The doors each include a door portion (e.g. 119 for the first door 110) that hangs from one or more arms (e.g. 116, 117), with a support portion (112, 114) formed at the end of each arm. In the embodiments depicted herein the doors each have two arms and two support portions, while in other embodiments the door may have a single arm (preferably centered about the width of the door and a single support portion. In still other embodiments, the door have three or more arms and corresponding support portions that are spaced therealong. The door portion (e.g. 119) is configured to fully or partially block access to the portion of the cabinet that is in registry with the door. The door portion may have various windows, information, or sub-access panels or doors (i.e. a movable door within the door portion that can be independently opened or closed with respect to the door - not shown). The arms e.g. 116, 117 extend vertically from a top edge of the door (when the door is in the vertical orientation where it will hang from the bracket 101. The support portions 112, 114 extend outwardly from the respective arms (e.g. support portion 112 extends from arm 116, support portion 114 extends from arm 117). The support portions 112, 114 preferably extend substantially perpendicular to a vertical axis through the respective arm. The term "substantially perpendicular" as used here includes exactly perpendicular as well as angles that are intended to be perpendicular but are within common manufacturing tolerances that are acceptable in the industry may cause the actual angle to be slightly offset from perpendicular due to the manufacturing tolerances.

As best shown in FIG. 12 (which specifically depicts the third door 130 positioned upon the left side of the cabinet - but is equally applicable for the other doors) the support portions may extend in both directions outboard of the arm. In this figure the first support portion 132 that extends from arm 136 extends both left and right of the arm to form a width that is substantially wider than the arm and therefore substantially wider than the space (not shown - similar to space GG) between offset supports 222 and 232 and such that the first support portion 132 simultaneously rests upon offset supports 222 and 232. Similarly the support portion 134 simultaneously rests upon offset supports 232 and 242. As depicted in FIG. 12, portions of each of the first and second supports 132, 134 extend in the space below respective tabs 234 and 244. As can be understood with reference to FIG. 12, the disposal of the supports 132, 134 below respective tabs 234, 244 prevents the door 130 from being able to be pulled vertically upward (direction DD - FIG. 12) with respect to the bracket 101 and therefore maintains the door 130 hanging in the current position, with rotation (Q, QQ) being the only possible motion of the door 130 with respect to the housing of the cabinet 310.

The first door 110 hangs from the bracket 101 in a similar manner as how the third door hangs as discussed above, with the first support 112 extending below the tab 144. The second door 110 is wider than the third door 130 and therefore the second arm 117 of the first door extends through a space between the offset supports 162 and 172 (space similar to GG) with the second support 114 resting upon offset supports 162 and 172 (from which a tab does not ultimately extend). The presence of the tab 144 above a portion of the first support 112 prevents the door from being pulled vertically upward when the first door 110 is properly installed upon the bracket 101 in the right position.

The center door 120 has a first arm 126 that extends through a space between offset supports 182 and 192 (similar to space GG) with the first support 122 resting thereon, and a second arm 127 that extends through a space between offset supports 202, 212 with the second support 124 resting thereon. In this embodiment there are no tabs above either the first or second supports 122, 124 when the door is installed as depicted FIGs. 9-10, so the second door can be lifted vertically upward (direction D - FIG. 12) to remove the second door from the bracket 101.

In embodiments where the doors are arranged upon the bracket as depicted in FIGs. 13a and 13b (right to left order: third door 130, second door 120, first door 110), the doors are arranged as can be understood with reference to the description above and with reference to FIGs. 13a and 13b. As one difference that will be readily appreciated - the third door is narrower than the third door. Accordingly, when positioned as in FIGs. 13a and 13b, the first and second supports 132, 134 of the third door are positioned under respective tabs 144, 154, and only the second support 114 of the first door 110 is positioned under a tab (tab 244).

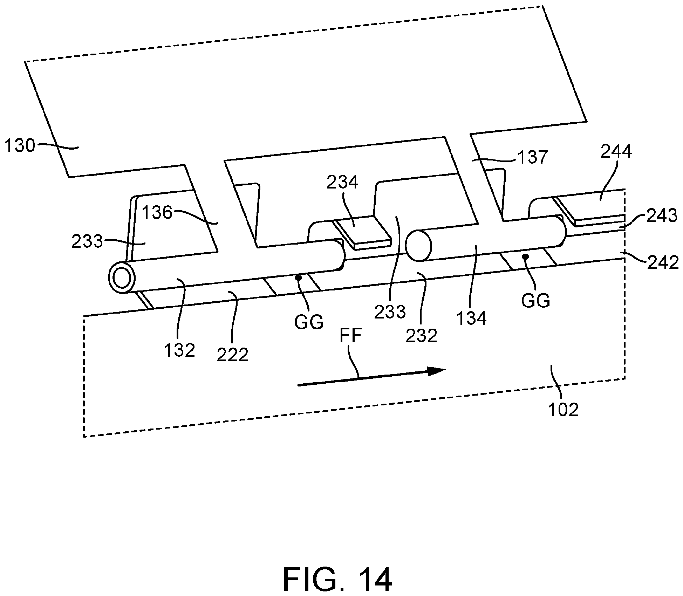

The doors are installed into the bracket 101 as follows and as schematically depicted in FIG. 14 (third door 130 -first door 110 is similar as discussed below and second door 120 is similar as discussed below). The door 130 is aligned vertically above the bracket 101 and specifically vertically above such that the supports 132 and 134 can approach the offset supports 222 and 232 from above the support walls 223, 233 as shown in the figure. The door is aligned such that the arms 136, 137 are inboard from the position of the spaces GG that they will ultimately extend through (see FIGs. 9-11) such that the support 132 is inboard of the tab 234 and the support 134 is inboard of the tab 244. Once the supports reach the offset supports 222, 232, the door is translated outboard in the direction FF until the arms are in registry with the spaces GG between the offset supports (and the corresponding spaces between the support walls 223/233 and 233/243) and the supports 132, 134 are below the respective tabs 234, 244. The door 130 is then rotated to a position where the arms extend through the spaces GG and the door hangs from the supports 132, 134.

The first door 110 is then installed in the same fashion, in a similar way to that depicted in FIG. 14, but the first door 110 approaches the bracket 101 (from the vertical downward orientation as depicted in FIG. 14) with the door 110 positioned inboard of its final position such that the arms 116, 117 are inboard of the respective space between offset supports 142/152 and 162/172, respectively, and such that the supports 112 is inboard of the tab 144. Once the supports 112, 114 contact the offset supports, the door is translated outboard (opposite direction to direction FF for door 110 which is installed on the opposite side of the cabinet as in FIG. 14) until the arms 116, 117 are in registry with spaces between offset supports 142/152 (and the spaces between corresponding support walls 142/153) and 162/172 (support walls 162/173) and the support 112 is below the tab 144. The door 110 is then rotated to a position where the arms extend through the spaces and the door 110 hangs from the supports.

Finally, the second door is positioned in the orientation depicted in FIG. 14 (vertically downward) so that the supports 122, 124 approach and contact the respective offset supports 182/192 and 202/212 and the arms 126, 127 are aligned with the spaces (not shown - like space GG) between those offset supports and the support walls (183/193, 203/213). When the supports 122, 124 reach the offset supports, the door 120 is rotated until the arms extend through the spaces and the door hangs from the support walls. The presence of the second door 120 prevents the first and third doors 110, 130 from sliding inwardly to free the supports from below the respective tabs - so that the first and third are maintained in position.

The doors 110, 120, 130 may be removed in the opposite manner. First the second door is rotated to an orientation like FIG. 14 where it can be lifted upwardly off of the offset supports. Then the first and third doors may also be rotated to the vertical manner like FIG. 14 and then slid inwardly so that the supports clear from below the tabs to allow those doors to be lifted upwardly off of the offset supports.

The term "about" is specifically defined herein to include a range that includes the reference value and plus or minus 5% of the reference value. The term "substantially the same" is when the item under comparison is within 5% of the aspect of the reference value of the item. Similarly, the term "substantially perpendicular" as used here includes exactly perpendicular as well as angles that are intended to be perpendicular but are within common manufacturing tolerances that are acceptable in the industry may cause the actual angle to be slightly offset from perpendicular due to the manufacturing tolerances

The computing elements or functions disclosed herein such as the controller 1000 may include a processor and a memory storing computer-readable instructions executable by the processor. In some embodiments, the processor is a hardware processor configured to perform a predefined set of basic operations in response to receiving a corresponding basic instruction selected from a predefined native instruction set of codes. Each of the modules defined herein may include a corresponding set of machine codes selected from the native instruction set, and which may be stored in the memory. Embodiments can be implemented as a software product stored ina machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, optical disc, memory device (volatile or non-volatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described embodiments can also be stored on the machine-readable medium. Software running from the machine- readable medium can interface with circuitry to perform the described tasks. Moreover, embodiments may be implemented on application specific integrated circuits (ASICs) or very large scale integrated (VLSI) circuits. In fact, persons of ordinary skill in the art may utilize any number of suitable structures capable of executing logical operations according to the embodiments.

Naturally, in view of the teachings and disclosures herein, persons having ordinary skill in the art may appreciate that alternate designs and/or embodiments of the invention may be possible (e.g., with substitution of one or more components for others, with alternate configurations of components, etc). Although some of the components, relations, configurations, and/or steps according to the invention are not specifically referenced and/or depicted in association with one another, they may be used, and/or adapted for use, in association therewith. All of the aforementioned and various other structures, configurations, relationships, utilities, any which may be depicted and/or based hereon, and the like may be, but are not necessarily, incorporated into and/or achieved by the invention. Any one or more of the aforementioned and/or depicted structures, configurations, relationships, utilities and the like may be implemented in and/or by the invention, on their own, and/or without reference, regard or likewise implementation of any of the other aforementioned structures, configurations, relationships, utilities and the like, in various permutations and combinations, as will be readily apparent to those skilled in the art, without departing from the pith, marrow, and spirit of the disclosed invention

While the preferred embodiments of the disclosed have been described, it should be understood that the invention is not so limited and modifications may be made without departing from the disclosure. The scope of the disclosure is defined by the appended claims, and all devices that come within the meaning of the claims, either literally or by equivalence, are intended to be embraced therein.

The specification can be best understood with reference to the following Numbered Paragraphs:
Numbered Paragraph 1: A hinge system for supporting a plurality of doors, comprising:
   a bracket that is configured to be fixed to a housing, the bracket aligned to receive complimentary features from one or more doors that hang from the bracket;
   the bracket comprises a panel that is configured to be rigidly mounted to the housing, a plurality of offset supports that extend from the panel in a cantilevered manner; and a plurality of support walls that extend from respective offset supports and extend substantially perpendicular to a plane through the respective offset supports,
   the bracket extends from a first end portion to an opposite second end portion, a first offset support of the plurality of offset supports that is aligned at the first end portion further comprises a first tab that extends from the support wall that extends from the first offset support, wherein the first tab extends substantially in parallel to and above the respective first offset support to establish a space therebetween, and a second offset support of the plurality of offset supports that is aligned at the second end portion further comprises a tab that extends from the support wall that extends from the second offset support, wherein the tab extends substantially in parallel to and above the respective second offset support to establish a second space therebetween.
Numbered Paragraph 2: The hinge system of Numbered Paragraph 1, wherein a third offset support of the plurality of offset supports that is adjacent to and inboard of the first offset support comprises a tab that extends from the support wall that extends from the third offset support, wherein the tab extends substantially in parallel to and above the respective third offset support to establish a third space therebetween, and
   a fourth offset support of the plurality of offset supports that is adjacent to and inboard of the second offset support comprises a tab that extends from the support wall that extends from the fourth offset support, wherein the tab extends substantially in parallel to and above the respective the fourth offset support to establish a fourth space therebetween.
Numbered Paragraph 3: The hinge system of Numbered Paragraph 1, wherein the plurality of offset supports and their corresponding pluralities of support walls are each aligned to establish a space between edges of adjacent offset supports and corresponding support walls.
Numbered Paragraph 4: The hinge system of Numbered Paragraph 1, further comprising a plurality of doors that are configured to be supported by the bracket, wherein each of the plurality of doors has two spaced supports which are the complementary features, wherein when the respective door of the plurality of doors is aligned with the bracket, the two spaced supports each rest upon two adjacent offset supports of the plurality of offset supports.
Numbered Paragraph 5: The hinge system of Numbered Paragraph 4, wherein a first door of the plurality of doors that is supported by the bracket and positioned proximate to the first end of the bracket, the first door is supported by the bracket such one of the two spaced supports is disposed under the first tab, and a second door of the plurality of doors that is supported by the bracket and positioned proximate to the second end of the bracket, the second door is supported by the bracket such that one of the two spaced supports is disposed under the second tab.
Numbered Paragraph 6: The hinge system of Numbered Paragraph 1, wherein a third offset support of the plurality of offset supports that is adjacent to the first offset support comprises a tab that extends from the support wall that extends from the third offset support, wherein the tab extends substantially in parallel to the third offset support, and wherein a fourth offset support of the plurality of offset supports that is adjacent to the second offset support comprises a tab that extends from the support wall that extends from the fourth offset support, wherein the tab extends substantially in parallel to the fourth offset support;
   further comprising a plurality of doors that are configured to be supported by the bracket, wherein each of the plurality of doors has two spaced supports which are the complementary features, wherein when the respective door of the plurality of doors is aligned with the bracket, the two spaced supports each rest upon two offset supports of the plurality of offset supports,
   wherein a first door of the plurality of doors that is supported by the bracket and positioned proximate to the first end portion of the bracket, the first door is supported by the bracket such one of the two spaced supports is disposed under the first tab, and a second door of the plurality of doors that is supported by the bracket and positioned proximate to the second end portion of the bracket such that one of the two spaced supports is disposed under the second tab,
   wherein in one or both of the first and second doors, the second of the two spaced supports is disposed under the either the third or the fourth tab.
Numbered Paragraph 7: The hinge system of Numbered Paragraph 6, wherein the first door is configured to be installed to be supported upon the bracket by initially placing the two spaced supports that will rest upon the offset supports of the plurality of offset supports including the first offset support with the first tab upon a position upon or aligned with the first offset support that is not directly below the tab, and then sliding the first door horizontally such that the two spaced supports slide upon the respective offset supports until the first spaced support is positioned vertically below the tab.
Numbered Paragraph 8: The hinge system of Numbered Paragraph 7, wherein a second door that is configured to be installed to be supported upon the bracket directly adjacent to the first door is configured to be installed upon the bracket after the first door is installed upon the bracket and positioned such that the first spaced support is positioned vertically below the tab, wherein the second door is configured to be installed upon the bracket by placing the two spaced supports upon the offset supports of the plurality of offset supports including the second offset support with the second tab, and then sliding the first door horizontally such that the two spaced supports slide upon the respective offset supports until the second spaced support is positioned vertically below the second tab.
Numbered Paragraph 9: A method of installing doors upon a housing, comprising:
   providing a housing with a surface that rigidly supports a bracket thereon, the bracket aligned to receive complementary features of one or more doors that hang from the bracket, the bracket comprising:
   a panel that is configured to be rigidly mounted to the housing, a plurality of offset supports that extend from the panel in a cantilevered manner; and a plurality of support walls that extend from respective offset supports and extend substantially perpendicular to a plane through the respective offset supports,
   the bracket extends from an first end to an opposite second end, a first offset support of the plurality of offset supports that is aligned at the first end further comprises a first tab that extends from the support wall that extends from the first offset support, wherein the first tab extends substantially in parallel to the respective first offset support, and a second offset support of the plurality of offset supports that is aligned at the second end further comprises a tab that extends from the support wall that extends from the second offset support, wherein the tab extends substantially in parallel to the respective second offset support,
   a third offset support of the plurality of offset supports that is adjacent to and inboard of the first offset support comprises a tab that extends from the support wall that extends from the third offset support, wherein the tab extends substantially in parallel to the third offset support, and
   a fourth offset support of the plurality of offset supports that is adjacent to and inboard of the second offset support comprises a tab that extends from the support wall that extends from the fourth offset support, wherein the tab extends substantially in parallel to the fourth offset support;
   providing a plurality of doors, wherein each door of the plurality of doors comprises:
   at least two spaced supports which are the complementary features, wherein when the respective door of the plurality of doors is aligned with the bracket, the two spaced supports rest upon two offset supports of the plurality of offset supports,
   the first door is supported by the bracket such one of the at least two spaced supports is disposed under the first tab, and a second door of the plurality of doors that is supported by the bracket and positioned proximate to the second end of the bracket, the second door is supported by the bracket such that one of the at least two spaced supports is disposed under the second tab; and
   initially placing the first spaced supports of the two spaced supports that will rest upon the first offset support with the first tab at a position upon or aligned with the first offset support that is not directly below the tab, and then sliding the first door horizontally such that the two spaced supports slide upon the respective offset supports until the first spaced support is positioned vertically below the tab.
Numbered Paragraph 10: The method of Numbered Paragraph 9, further comprising placing a second door that is configured to be installed to be supported upon the bracket directly adjacent to the first door after the first door is installed upon the bracket and positioned such that the first spaced support is positioned vertically below the tab, placing the two spaced supports of the second door upon the offset supports of the plurality of offset supports that are adjacent to and inboard most offset support that supports the first door.
Numbered Paragraph 11: A system of fixing two heated cabinets together, comprising:
   a first cabinet that includes opposite left and right side surfaces, and a rear wall that extends between the opposite left and right side surfaces, the first cabinet is heated by a heating system; and
   a second cabinet that includes opposite left and right side surfaces, and a rear wall that extends between the opposite left and right side surfaces, the second cabinet is heated by a heating system;
   the rear wall of each of the first and second cabinets comprises first and second sets of vertically aligned and spaced apertures, with each respective first set of apertures centered along a first vertical line that is at a first distance from a left end of the rear wall that is proximate to the left side surface, and each respective second set of apertures is centered along a second vertical line that is at the first distance from a right end of the rear wall that is proximate to the right side surface, wherein each aperture within the first and second sets of apertures corresponds to an aperture of the other of the first and second sets of apertures, wherein each corresponding aperture from the first and second sets has a top edge that is at the same vertical height within the rear wall and has a bottom edge that is at the same lower vertical height within the rear wall;
   a connection bracket, the connection bracket comprises an elongate support, and comprises a first plurality of legs and a second plurality of legs that each extend substantially perpendicularly from the elongate support, each leg establishes an outer end that extends the furthest away from the elongate support, each of the first plurality of legs are vertically aligned with each other and each of the second plurality of legs are vertically aligned with each other, wherein each leg of the first plurality of legs is in horizontal alignment with a corresponding leg of the second plurality of legs;
   each leg comprises a tooth that extends downwardly therefrom, wherein the tooth establishes a space between the tooth and the elongate support wherein the space has a thickness is greater than a thickness of the rear wall that defines the apertures.
Numbered Paragraph 12: The system of Numbered Paragraph 11, wherein the rear wall further comprises a panel that is disposed horizontally along a top portion of the rear panel to define a first distance between a bottom edge of the panel and the top edge of each an upper most aperture of each of the first and second sets of vertically aligned and spaced apertures.
Numbered Paragraph 13: The system of Numbered Paragraph 12, wherein the connection bracket comprises an upper portion that extends above an uppermost of the first and second plurality of legs, wherein when the connection bracket is installed upon the rear wall with the first and second plurality of legs installed within corresponding apertures from one of the first set of apertures in the first cabinet and from the other of the first and second set of apertures in the second cabinet, the upper portion extends within the first distance and is below the panel.
Numbered Paragraph 14: The system of Numbered Paragraph 13, wherein when the connection bracket is installed upon the rear wall an outer surface of the connection bracket is substantially flush with an outer surface of the panel.
Numbered Paragraph 15: The system of either one of Numbered Paragraphs 13 or 14, wherein when the connection bracket is installed upon the rear wall an upper edge of the connection bracket is proximate to a lower edge of the panel, with a distance between the connection bracket and the panel being less than a wall thickness of the elongate support.
Numbered Paragraph 16: The system of any one of Numbered Paragraphs 12-15, wherein the thickness of the space is greater than a combined thickness of the rear wall that defines the apertures and a thickness of the panel.
Numbered Paragraph 17: The system of one of Numbered Paragraphs 12-16, wherein when the connection bracket is installed upon the rear wall with the first and second plurality of legs installed such that the first plurality of legs are installed within corresponding apertures from one of the first set of apertures or the second set of apertures in the first cabinet and from the other of the first and second set of apertures in the second cabinet, the connection bracket extends below a portion of the panel of the first cabinet and below a portion of the panel of the second cabinet.
Numbered Paragraph 18: The system of one of Numbered Paragraphs 11-17 wherein the first and cabinets are configured to be aligned such that a left side surface of the first cabinet is proximate to the right side surface of the second cabinet, or such that the left side surface of the second cabinet is proximate to the right side surface of the first cabinet.
Numbered Paragraph 19: A method of installing two heated cabinets together, comprising:
   providing the first and second cabinets of one of Numbered Paragraphs 11-18
   aligning the cabinets in contact with each other such the left wall of the first cabinet contacts the right wall of the second cabinet or such that the left wall of the second cabinet contacts the right wall of the first cabinet, and such that the respective rear walls of the first and second cabinets are aligned with each other along a plane, such that one of the first and second cabinets is aligned as a left cabinet and the other of the first and second cabinets is aligned as a right cabinet;
   inserting the first plurality of legs of the connection bracket within the first set of vertically aligned apertures of the right cabinet and the second plurality of legs of the connection bracket within the second set of vertically aligned apertures of the left cabinet;
   moving the connection bracket downwardly with respect to the right and left cabinets until the upper portion of the connection bracket extends within the first distance and the upper edge of the connection bracket is below the panel.

## Claims

1. A hinge system for supporting a plurality of doors, comprising:
a bracket that is configured to be fixed to a housing, the bracket aligned to receive complimentary features from one or more doors that hang from the bracket;
the bracket comprises a panel that is configured to be rigidly mounted to the housing, a plurality of offset supports that extend from the panel in a cantilevered manner; and a plurality of support walls that extend from respective offset supports and extend substantially perpendicular to a plane through the respective offset supports,
the bracket extends from a first end portion to an opposite second end portion, a first offset support of the plurality of offset supports that is aligned at the first end portion further comprises a first tab that extends from the support wall that extends from the first offset support, wherein the first tab extends substantially in parallel to and above the respective first offset support to establish a space therebetween, and a second offset support of the plurality of offset supports that is aligned at the second end portion further comprises a tab that extends from the support wall that extends from the second offset support, wherein the tab extends substantially in parallel to and above the respective second offset support to establish a second space therebetween.

2. The hinge system of claim 1, wherein a third offset support of the plurality of offset supports that is adjacent to and inboard of the first offset support comprises a tab that extends from the support wall that extends from the third offset support, wherein the tab extends substantially in parallel to and above the respective third offset support to establish a third space therebetween, and
a fourth offset support of the plurality of offset supports that is adjacent to and inboard of the second offset support comprises a tab that extends from the support wall that extends from the fourth offset support, wherein the tab extends substantially in parallel to and above the respective the fourth offset support to establish a fourth space therebetween.

3. The hinge system of either one of claim 1 or claim 2, wherein the plurality of offset supports and their corresponding pluralities of support walls are each aligned to establish a space between edges of adjacent offset supports and corresponding support walls.

4. The hinge system of claim 1, further comprising a plurality of doors that are configured to be supported by the bracket, wherein each of the plurality of doors has two spaced supports which are the complementary features, wherein when the respective door of the plurality of doors is aligned with the bracket, the two spaced supports each rest upon two adjacent offset supports of the plurality of offset supports,
for example, wherein a first door of the plurality of doors that is supported by the bracket and positioned proximate to the first end of the bracket, the first door is supported by the bracket such one of the two spaced supports is disposed under the first tab, and a second door of the plurality of doors that is supported by the bracket and positioned proximate to the second end of the bracket, the second door is supported by the bracket such that one of the two spaced supports is disposed under the second tab.

5. The hinge system of claim 1, wherein a third offset support of the plurality of offset supports that is adjacent to the first offset support comprises a tab that extends from the support wall that extends from the third offset support, wherein the tab extends substantially in parallel to the third offset support, and wherein a fourth offset support of the plurality of offset supports that is adjacent to the second offset support comprises a tab that extends from the support wall that extends from the fourth offset support, wherein the tab extends substantially in parallel to the fourth offset support;
further comprising a plurality of doors that are configured to be supported by the bracket, wherein each of the plurality of doors has two spaced supports which are the complementary features, wherein when the respective door of the plurality of doors is aligned with the bracket, the two spaced supports each rest upon two offset supports of the plurality of offset supports,
wherein a first door of the plurality of doors that is supported by the bracket and positioned proximate to the first end portion of the bracket, the first door is supported by the bracket such one of the two spaced supports is disposed under the first tab, and a second door of the plurality of doors that is supported by the bracket and positioned proximate to the second end portion of the bracket such that one of the two spaced supports is disposed under the second tab,
wherein in one or both of the first and second doors, the second of the two spaced supports is disposed under the either the third or the fourth tab.

6. The hinge system of claim 5, wherein the first door is configured to be installed to be supported upon the bracket by initially placing the two spaced supports that will rest upon the offset supports of the plurality of offset supports including the first offset support with the first tab upon a position upon or aligned with the first offset support that is not directly below the tab, and then sliding the first door horizontally such that the two spaced supports slide upon the respective offset supports until the first spaced support is positioned vertically below the tab,
for example wherein a second door that is configured to be installed to be supported upon the bracket directly adjacent to the first door is configured to be installed upon the bracket after the first door is installed upon the bracket and positioned such that the first spaced support is positioned vertically below the tab, wherein the second door is configured to be installed upon the bracket by placing the two spaced supports upon the offset supports of the plurality of offset supports including the second offset support with the second tab, and then sliding the first door horizontally such that the two spaced supports slide upon the respective offset supports until the second spaced support is positioned vertically below the second tab.

7. A method of installing doors upon a housing that includes the hinge system of claim 2, comprising:
providing a housing with a surface that rigidly supports the bracket thereon,
the bracket further comprising,
a third offset support of the plurality of offset supports that is adjacent to and inboard of the first offset support comprises a tab that extends from the support wall that extends from the third offset support, wherein the tab extends substantially in parallel to the third offset support, and
a fourth offset support of the plurality of offset supports that is adjacent to and inboard of the second offset support comprises a tab that extends from the support wall that extends from the fourth offset support, wherein the tab extends substantially in parallel to the fourth offset support;
providing a plurality of doors, wherein each door of the plurality of doors comprises:
at least two spaced supports which are the complementary features, wherein when the respective door of the plurality of doors is aligned with the bracket, the two spaced supports rest upon two offset supports of the plurality of offset supports,
the first door is supported by the bracket such one of the at least two spaced supports is disposed under the first tab, and a second door of the plurality of doors that is supported by the bracket and positioned proximate to the second end of the bracket, the second door is supported by the bracket such that one of the at least two spaced supports is disposed under the second tab; and
initially placing the first spaced supports of the two spaced supports that will rest upon the first offset support with the first tab at a position upon or aligned with the first offset support that is not directly below the tab, and then sliding the first door horizontally such that the two spaced supports slide upon the respective offset supports until the first spaced support is positioned vertically below the tab.

8. The method of claim 7, further comprising placing a second door that is configured to be installed to be supported upon the bracket directly adjacent to the first door after the first door is installed upon the bracket and positioned such that the first spaced support is positioned vertically below the tab, placing the two spaced supports of the second door upon the offset supports of the plurality of offset supports that are adjacent to and inboard most offset support that supports the first door.

9. A system of fixing two heated cabinets together, comprising:
a first cabinet that includes opposite left and right side surfaces, and a rear wall that extends between the opposite left and right side surfaces, the first cabinet is heated by a heating system; and
a second cabinet that includes opposite left and right side surfaces, and a rear wall that extends between the opposite left and right side surfaces, the second cabinet is heated by a heating system;
the rear wall of each of the first and second cabinets comprises first and second sets of vertically aligned and spaced apertures, with each respective first set of apertures centered along a first vertical line that is at a first distance from a left end of the rear wall that is proximate to the left side surface, and each respective second set of apertures is centered along a second vertical line that is at the first distance from a right end of the rear wall that is proximate to the right side surface, wherein each aperture within the first and second sets of apertures corresponds to an aperture of the other of the first and second sets of apertures, wherein each corresponding aperture from the first and second sets has a top edge that is at the same vertical height within the rear wall and has a bottom edge that is at the same lower vertical height within the rear wall;
a connection bracket, the connection bracket comprises an elongate support, and comprises a first plurality of legs and a second plurality of legs that each extend substantially perpendicularly from the elongate support, each leg establishes an outer end that extends the furthest away from the elongate support, each of the first plurality of legs are vertically aligned with each other and each of the second plurality of legs are vertically aligned with each other, wherein each leg of the first plurality of legs is in horizontal alignment with a corresponding leg of the second plurality of legs;
each leg comprises a tooth that extends downwardly therefrom, wherein the tooth establishes a space between the tooth and the elongate support wherein the space has a thickness is greater than a thickness of the rear wall that defines the apertures.

10. The system of claim 9, wherein the rear wall further comprises a panel that is disposed horizontally along a top portion of the rear panel to define a first distance between a bottom edge of the panel and the top edge of each an upper most aperture of each of the first and second sets of vertically aligned and spaced apertures.

11. The system of claim 10, wherein the connection bracket comprises an upper portion that extends above an uppermost of the first and second plurality of legs, wherein when the connection bracket is installed upon the rear wall with the first and second plurality of legs installed within corresponding apertures from one of the first set of apertures in the first cabinet and from the other of the first and second set of apertures in the second cabinet, the upper portion extends within the first distance and is below the panel,
for example wherein when the connection bracket is installed upon the rear wall:
(a) an outer surface of the connection bracket is substantially flush with an outer surface of the panel, and/or
(b) an upper edge of the connection bracket is proximate to a lower edge of the panel, with a distance between the connection bracket and the panel being less than a wall thickness of the elongate support.

12. The system of claim 10 or 11, wherein the thickness of the space is greater than a combined thickness of the rear wall that defines the apertures and a thickness of the panel.

13. The system of one of claims 10 to 12, wherein when the connection bracket is installed upon the rear wall with the first and second plurality of legs installed such that the first plurality of legs are installed within corresponding apertures from one of the first set of apertures or the second set of apertures in the first cabinet and from the other of the first and second set of apertures in the second cabinet, the connection bracket extends below a portion of the panel of the first cabinet and below a portion of the panel of the second cabinet.

14. The system of one of claims 9 to 13 wherein the first and cabinets are configured to be aligned such that a left side surface of the first cabinet is proximate to the right side surface of the second cabinet, or such that the left side surface of the second cabinet is proximate to the right side surface of the first cabinet.

15. A method of installing two heated cabinets together, comprising:
providing the first and second cabinets of one of claims 9 to 14
aligning the cabinets in contact with each other such the left wall of the first cabinet contacts the right wall of the second cabinet or such that the left wall of the second cabinet contacts the right wall of the first cabinet, and such that the respective rear walls of the first and second cabinets are aligned with each other along a plane, such that one of the first and second cabinets is aligned as a left cabinet and the other of the first and second cabinets is aligned as a right cabinet;
inserting the first plurality of legs of the connection bracket within the first set of vertically aligned apertures of the right cabinet and the second plurality of legs of the connection bracket within the second set of vertically aligned apertures of the left cabinet;
moving the connection bracket downwardly with respect to the right and left cabinets until the upper portion of the connection bracket extends within the first distance and the upper edge of the connection bracket is below the panel.
